# EUROPEAN PATENT APPLICATION

(11) **EP 2 369 134 A1**
(43) Date of publication of application: **28.09.2011**
(21) Application number: 10380034.8
(22) Date of filing: 12.03.2010
(51) Int. Cl.: F01D 5/14, F01D 5/16

(54) **Turbine blade with cavities for the reduction of weight and vibrations**

(71) Applicant: Industria de Turbo Propulsores S.A., 48170 Zamudio (Vizcaya) (ES)
(72) Inventor: The designation of the inventor has not yet been filed
(74) Representative: Carvajal y Urquijo, Isabel

(57) **Abstract**

Turbine blade, comprising an airfoil portion (1) on which the impeller fluid acts, a lower platform (2) through which the airfoil portion (1) is joined to a root (3), through which the blade is fixed to a turbine rotating disk, and an upper platform (4) arranged at the end of the airfoil portion (1) opposite the root (3). The turbine blade object of the present invention has at least one hollow part (5), which originates an inner wall (6) of the blade, being it possible to have a plurality of hollow parts (5) along the entire blade, and mainly on its lower part or on its upper part, independent from one another and not connected to one another.

## Description

### FIELD OF THE INVENTION

The present invention refers to the technical field of turbines, particularly to the optimum configuration of non-refrigerated blades of gas turbines, which are the elements receiving the gas pressure power and rotate providing rotational movement to different elements.

### BACKGROUND OF THE INVENTION

The main function of the turbine blade is to extract energy from the main or primary current of the engine, transmitting the power exerted by the gas on the pressure and suction faces to the disk contributing to the turbine power.

The turbine blade is fixed to a disk the rotation of which it causes by pressure. This rotation produces a movement of different devices according to the use for which the turbine is designed. There exist several common applications where turbines are used.

First, they are used in aircraft engines. The movement of the compressor of a turboreactor engine, or the movement of the fan or low-pressure compressor of a turbofan.

Second, they are used in propeller aircraft engines or helicopter engines. They provide the rotation of the propeller shaft or rotor of a helicopter turboshaft engine.

Industrial gas turbines are also considered, which produce the movement of the energy generator.

The main parts of the turbine blades are the airfoil portion, which is arranged between the upper platform and the lower platform, joining the airfoil portion to a root, through which the blade is joined to a turbine rotating disk. Although these elements are often present in almost all turbines, there exist some particular turbines which lack some of the elements.

Solid turbine blades are those in which all their parts described are solid, that is, they do not have holes inside them.

By contrast, hollow blades are those in which all their parts described are hollow.

Both solid and hollow blades have advantages and disadvantages to comply with the turbine operation requirements. Among the most important requirements we can include aerodynamic efficiency, weight, vibration performance and lifespan period. Whether the blades are solid or hollow has great influence on said requirements.

A solid blade design provides less aerodynamic efficiency in certain areas and worse vibration performance.

By contrast, a hollow blade design offers lower weight and better rigidity. Besides, another of the most common objectives of the hollow blades is the refrigeration of the blade itself when a gas or liquid flow is caused to circulate, at a lower temperature than the blade, through the inner hollow duct.

As regards the aerodynamic efficiency, the hollow blades can have more efficient airfoil portions in certain areas, but one of the problems of those hollow blades is the inability to have a fine airfoil portion in other areas, since the manufacturing of the hollow part requires greater dimension values than in a solid design. By contrast, it is known in the state of the art that to attain greater efficiency it is necessary to have absolute freedom when designing airfoils.

Therefore blades providing an optimum compliance of turbine operation requirements are desirable, avoiding the existing inconveniencies in the previous systems of the state of the art.

### DESCRIPTION OF THE INVENTION

The present invention solves the existing problems in the state of the art through a turbine blade, of the type comprising an airfoil portion on which the impeller fluid acts, arranged between a lower platform and an upper platform. Through the lower platform the airfoil portion is joined to a root, through which the blade is fixed to a turbine rotating disk. The upper platform is arranged at the end of the airfoil portion opposite the root.

The turbine blade object of the present invention has at least one hollow part, which logically originates an inner wall of the blade.

According to different particular embodiments the blade can have a plurality of hollow parts all along it. It can preferably have a hollow part in the lower part of the blade, although it can also have a hollow part in the upper part thereof, or a hollow part in the lower part and another one in the upper part, independent of each other and isolated from each other. According to different embodiments of the present invention, the blade presents one or several outlets to the exterior, and even some hollows which can be opened or covered.

Thus, the blade object of the invention has a suitable configuration for the turbine operation requirements, providing the blade solid parts and hollow parts, which means joining the advantages of both configurations and providing an optimum design as regards the turbine efficiency, vibration performance and weight.

### DESCRIPTION OF THE DRAWINGS

The following is a brief description of a series of drawings which will help understand the invention better relating to an embodiment of said invention which is presented as a non-limiting example thereof.

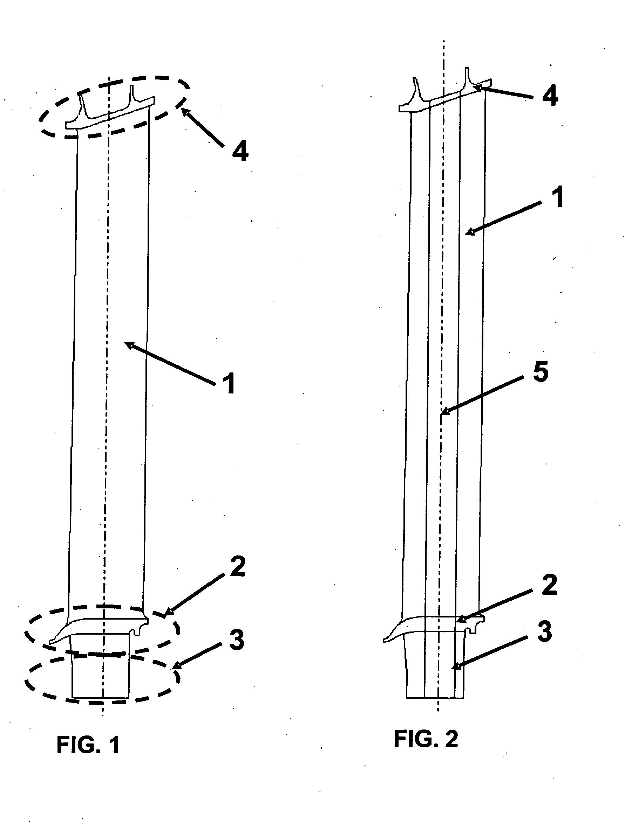

Figure 1 shows a turbine solid blade of the state of the art in which its main parts can be seen.
Figure 2 shows a turbine hollow blade of the state of the art in which its main parts can be seen.
Figure 3 is a view of an embodiment of a blade with a hollow part object of the present invention.
Figure 4 shows a different embodiment of a blade with hollow parts object of the present invention.
Figure 5 is a sectional view by the AA plane of figure 4.
Figure 6 is a sectional view by the BB plane of figure 4.

In these figures reference is made to a set of elements, which are:

| | |
|---|---|
| 1. | airfoil portion |
| 2. | lower platform |
| 3. | root |
| 4. | upper platform |
| 5. | hollow part of the blade |
| 6. | inner wall of the blade |

### DESCRIPTION OF PREFERRED EMBODIMENTS OF THE INVENTION

The object of the present invention is a turbine blade, which, as it can be seen in the drawings, has an airfoil portion 1 on which the impeller fluid acts, preferably a gas. The airfoil portion 1 is arranged between a lower platform 2 and an upper platform 4. Through the lower platform 2 the airfoil portion 1 is joined to a root 3, through which the blade is fixed to a turbine rotating disk. The upper platform 4 is arranged at the end of the airfoil portion 1 opposite said root 3. Thus, the lower part of the blade is formed by the lower part of the airfoil portion 1, the lower platform 2 and the root 3, and the upper part of the blade is formed by the upper part of the airfoil portion 1 and the upper platform 4.

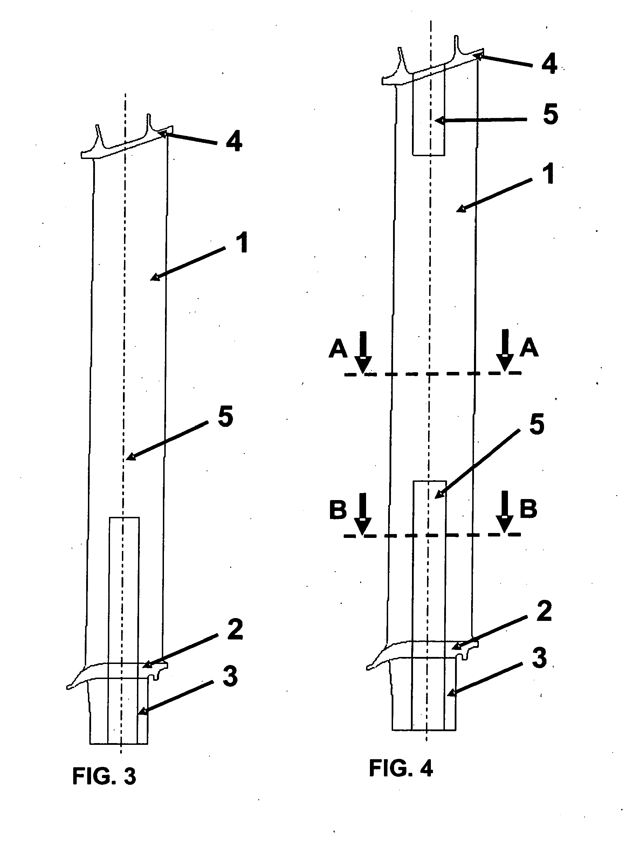

As it can be seen in figures 3 to 4, the turbine blade object of the present invention has at least one hollow part 5, which originates a lower wall 6 of the blade.

According to different embodiments, the blade can have a hollow part 5 arranged in the lower part of the blade, specifically in the lower part of the airfoil portion 1, in the lower platform 2, or in the root 3. Alternatively, this hollow part 5 can cover several areas of the lower part of the blade, that is, the lower platform 2 and the lower part of the airfoil portion 1, the lower platform 2 and the root 3, or in the three areas. Likewise, the hollow part 5 can be arranged in the upper part of the blade, particularly in the upper part of the airfoil portion 1, or in the upper platform 4, or else it can cover both the upper platform 4 and the airfoil portion 1.

According to a particular embodiment of the invention, the turbine blade has several hollow parts along its entire extension, as shown in figure 4. In this case, there is at least one hollow part 5 in the upper part of the blade, and at least one hollow part 5 in the lower part of the blade, and both hollow parts 5 are not interconnected, that is, they are isolated from each other, and are independent.

According to different embodiments of the invention, the turbine blade can have along its extension at least one exterior outlet and a plurality of hollows which can be opened or covered.

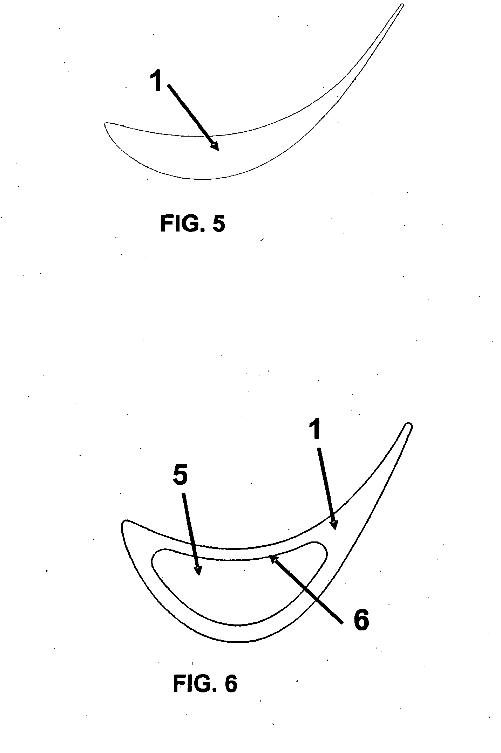

As it can be seen in figures 5 and 6, preferably, the geometry of the airfoil portion 1 in the hollow part 5 has a thicker section than the sections of the rest of said airfoil portion 1, that is, the sections in the solid parts of the blade, thus enabling to comply with the requirement for greater dimension values in the hollow part 5 than in the solid part as regards the blade design.

Also, according to a particular embodiment of the invention, the inner walls 6 of different hollow parts 5 of the blade can have different thicknesses, when it is necessary to grant some parts of the blade with different structural features as the others.

Once the invention has been clearly described, it is noted that the particular embodiments previously described can be modified in detail as long as they do not depart from the main principle and essence of the invention.

## Claims

1. Turbine blade, comprising
- an airfoil portion (1) on which the impeller fluid acts,
- a lower platform (2) through which the airfoil portion (1) is joined to a
- root (3), through which the blade is fixed to a turbine rotating disk, and
- an upper platform (4) arranged at the end of the airfoil portion (1) opposite the root (3),
said turbine blade **characterized in that** it comprises at least one hollow part (5), which originates an inner wall (6) of the blade.

2. Turbine blade according to claim 1, **characterized in that** it comprises a plurality of hollow parts (5) all along its extension.

3. Turbine blade according to any of the preceding claims, **characterized in that** the hollow part (5) is arranged in at least one area selected between the lower part of the airfoil portion (1), the lower platform (2), the root (3), and a combination thereof.

4. Turbine blade according to any of the claims 1 to 2, **characterized in that** the hollow part (5) is arranged in at least one area selected between the upper part of the airfoil portion (1), the upper platform (4), and a combination thereof.

5. Turbine blade according to any of the preceding claims, **characterized in that**
- it comprises at least a hollow part (5) in the upper part of the blade, which comprises the upper part of the airfoil portion (1) and the upper platform (4), and at least one hollow part (5) in the lower part of the airfoil portion (1), the lower platform (2), the root (3),
- and **in that** the hollow part (5) of the upper part of the blade is isolated from the hollow part (5) of the lower part of the blade.

6. Turbine blade according to any of the preceding claims, **characterized in that** it comprises at least one outlet to the exterior.

7. Turbine blade according to any of the preceding claims, **characterized in that** it comprises a plurality of hollows which have a configuration selected between opened and covered.

8. Turbine blade according to any of the preceding claims, **characterized in that** the geometry of the airfoil portion (1) in the hollow part (5) has a thicker section than the sections of the rest of said airfoil portion (1).

9. Turbine blade according to any of the preceding claims, **characterized in that** the inner walls (6) of different hollow parts (5) of the blade can have different thicknesses.
